# EUROPÄISCHE PATENTSCHRIFT

(11) **EP 2 428 429 B1**
(45) Veröffentlichungstag und Bekanntmachung des Hinweises auf die Patenterteilung: **17.07.2019**
(21) Anmeldenummer: 11006846.7
(22) Anmeldetag: 22.08.2011
(51) Int. Cl.: B62D 1/06

(54) **LENKRAD**
Streering wheel.
Volant.

(30) Priorität: 14.09.2010 DE 202010012582 U
(43) Veröffentlichungstag der Anmeldung: 14.03.2012
(73) Patentinhaber: I.G. Bauerhin GmbH, 63584 Gründau (DE)
(72) Erfinder: Letzas, Volker, 64839 Münster (DE); Schleucher, Thorsten, 63594 Hasselroth (DE); Emmerlich, Thomas, 63579 Freigericht (DE)
(74) Vertreter: Grimm, Ekkehard

(56) Entgegenhaltungen:
- WO-A1-2006/031183
- DE-U1-202010 012 582
- US-A1- 2004 100 131

## Beschreibung

Die vorliegende Erfindung betrifft ein Lenkrad mit einer Heizmatte, die zumindest ein dünnes, dreidimensional verformbares, textiles Trägermaterial sowie auf dem Trägermaterial befestigte, wellen- oder mäanderförmig verlaufende Heizleiter aufweist.

Lenkradheizungen werden zunehmend in Fahrzeugen eingebaut. Solche Lenkradheizungen umfassen Heizelemente, die den Lenkradkranz umgeben. Das Heizelement wird als flaches Flächenteil vorgefertigt und dann um den Körper des Lenkradkranzes gelegt und daran verklebt. Auf der Außenseite erhält der Lenkradkranz üblicherweise einen Lederüberzug, der in Umfangsrichtung des Lenkradkranzes an den zwei Stoßkanten zusammengeklebt oder vernäht ist. Um ein solches Heizelement auf den Lenkradkranz faltenfrei aufzubringen, muss das Heizelement insbesondere in Querschnittsrichtung des Lenkradkranzes, aber auch in Umfangsrichtung, gespannt werden.

Aus dem Stand der Technik sind verschiedene Arten von beheizbaren Lenkrädern bekannt.

Die DE 296 16 918 U1 beschreibt ein Lenkrad mit integrierter Lenkradheizung. Bei dieser Lenkradheizung wird der Heizleiter über ein Presswerkzeug an den Lenkradkörper angepresst und in eine Ummantelung des Lenkradkranzes aus einem thermoplastischen Kunststoff eingeschmolzen. Der Einschmelzvorgang tritt auf, nachdem eine Spannung an den Heizleiter angelegt worden ist.

Die DE 10 2006 004 145 A1 betrifft ein elektrisches Heizelement. Das Heizelement umfasst einen Träger, bei dem es sich um einen beliebigen Werkstoff handeln kann, beispielsweise um einen textilen Stoff, ein Vlies, eine Folie, ein Gewebe, ein Gewirke, gebildet aus synthetischem oder natürlichem Fasermaterial. Der Träger ist zumindest lokal mit zumindest zeitweise klebfähigem Material versehen, dessen Klebrigkeit gezielt aktivierbar ist. Der Heizleiter wird an dem Träger vernäht.

Ein beheizbares Fahrzeuglenkrad ist darüber hinaus in dem Dokument DE 200 13 784 U1 beschrieben, das die vorkennzeichnenden Merkmale des Anspruchs 1 offenbart. Dieses Fahrzeuglenkrad wird dadurch hergestellt, dass das üblicherweise vorgesehene Lenkradskelett zuerst umschäumt wird, so dass die innere Umschäumung gebildet wird. Auf dieser inneren Umschäumung wird dann die

Heizmatte befestigt. Anschließend wird dieses Zwischenprodukt in eine Schaumform gelegt und nochmals umschäumt, so dass die äußere Umschäumung gebildet wird. Schließlich muss nur noch auf die äußere Umschäumung die Lederabdeckung aufgebracht werden. Die Haptik dieses geschaffenen Lenkrads entspricht dem eines umlederten, nicht beheizbaren Lenkrades. Zudem ist ein Korrosionsschutz der Heizleiter in der Heizmatte auf einfache Weise dadurch erreicht, dass die äußere Umschäumung geschlossenporig ausgeführt ist. Die Heizmatte kann aus einem Gewebe bestehen, auf dem Heizleiter befestigt sind.

Die Nachteile dieser Technik liegen in erster Linie darin, dass bei dünnen Aufbauten der Elastomerschicht zwar eine verbesserte Haptik und Oberfläche erreicht werden kann, allerdings die Heizleiter mit hohen Fadenspannungen in die nunmehr dünne Elastomerschicht eingebettet werden müssen. Dies gelingt aufgrund der begrenzten Festigkeiten der Materialien nur ungenügend, so dass sich entweder Abzeichnungsprobleme bei kleineren Einbetttiefen ergeben oder aber die Stabilität der Elastomerschicht durch den Nähfaden so stark in Mitleidenschaft gezogen wird, dass beim Aufnähen oder Aufsticken des Heizleiter die Elastomerschicht reißen kann oder ein Aufbringen auf den Lenkradkranz durch die mechanische Dehnung zur Zerstörung der Fläche führt. Eine solche mechanische Dehnung ist aber erforderlich, um das Heizelement faltenfrei auf den Lenkradkranz aufbringen zu können.

Aus der EP 1 817 201 B1 ist ein beheiztes Polster für einen Fahrzeugsitz bekannt, bei dem die Heizwendel zwischen einem oberen Teil und einem unteren Teil des Polsters angeordnet ist. Das eine Teil weist Widerhaken auf, während das andere Teil mit Schlaufen versehen ist. Die Heizwendel wird auf das eine Polsterteil zwischen die Widerhaken in vorgegebenen Verlaufsmustern eingelegt. Danach werden die beiden Polsterteile aufeinandergelegt, so dass sich die Widerhaken des einen Teils mit den Schlaufen des anderen Teils verhaken, wodurch die Heizwendel zwischen den beiden Teilen eingebettet und fixiert ist.

Die WO 2006/031183 A1 beschreibt einen beheizten Fahrzeugsitz mit einer Sitzheizung, die eine untere Auflage und einen oberen Teil umfasst. Auf der Innenseite der unteren Auflage sind Haken vorhanden, während auf der inneren Seite des oberen Teils Schlaufen angeordnet sind. Ein Heizdraht wird in einem bestimmten Muster zwischen den Haken auf dem unteren Teil verlegt. Das obere Teil wird dann auf die untere Auflage aufgelegt, so dass sich die Schlaufen an den Haken verhaken, wodurch der Heizdraht zwischen dem oberen Teil und der unteren Auflage durch die Schlaufen und die Haken fixiert ist.

Ein Flächenheizelement ist in der US 2004/100131 A1 beschrieben. Dieses Heizelement soll beispielsweise in Bauelemente, wie Fußböden, Wände, Möbel, Fahrzeuge, Fenster, Matratzen, Rollstühle, Bekleidungsartikel, eingebaut werden. Im Bereich der Kraftfahrzeuge soll das Heizelement für Verkleidungsteile, Spiegel und auch für eine Lenkeinrichtung Anwendung finden, wo es zum Beheizen einer Nabe, des Lenkradkranzes, der Speichen, der Blinkerhebel, usw., eingesetzt werden soll. Konkrete Angaben, wie dieses Heizelement bei einer Lenkeinrichtung aufgebaut ist und befestigt wird, sind nicht zu entnehmen.

Der vorliegenden Erfindung liegt nun die Aufgabe zugrunde, ein Heizelement für Lenkräder zu schaffen, das alle Anforderungen an eine Lenkradheizung erfüllt und das ohne großen Aufwand faltenfrei auf den Grundkörper des Lenkradkranzes aufbringbar ist.

Gelöst wird die Aufgabe durch ein Heizelement für Lenkräder mit den Merkmalen des Anspruchs 1.

Das erfindungsgemäße Heizelement ist dadurch gekennzeichnet, dass die Heizmatte mittels auf dem Lenkradkranz aufgebrachten noppen-, haken- und/oder pilzförmigen Elementen, die die Heizmatte durchdringen und sich in dem Trägermaterial verhaken, fixiert ist.

Die Erfindung betrifft auch eine Heizeinheit für eine Lenkradheizung mit einer Heizmatte sowie einem auf einem Lenkradkranz aufbringbaren Noppen-, Haken- und/oder Pilzband.

Der Aufbau des erfindungsgemäßen, beheizbaren Lenkrads ermöglicht eine schnelle und sichere Montage der Lenkradheizung an dem Lenkradkranz. Es ist nur erforderlich, an oder auf dem Lenkradkranz noppen-, haken- und/oder pilzförmige Elemente anzuordnen. Anschließend wird die vorgefertigte Heizmatte auf dem Lenkradkranz aufgebracht, indem die Heizmatte abschnittsweise über den Lenkradkranz sowohl in Umfangsrichtung des Lenkradkranzes als auch in Richtung des Querschnitts des Lenkradkranzes gespannt und gegen die noppen-, haken- und/oder pilzförmigen Elemente gedrückt wird. Bei diesen noppen-, haken- und/oder pilzförmigen Elementen handelt es sich vorzugsweise um solche, die durch ein Noppen-, Haken- und/oder Pilzband gebildet sind. Die einzelnen Haken der hakenartigen Vorsprünge oder die einzelnen pilzartigen Vorsprünge dringen dann in die Heizmatte ein und verhaken sich darin. Auf diese Art und Weise wird die Heizmatte unmittelbar auf dem Lenkradkranz fixiert.

Es ist von Vorteil, dass die Heizmatte während des Montagevorgangs jederzeit, auch abschnittsweise, wieder von dem Lenkradkranz gelöst und dann erneut angedrückt und damit fixiert werden kann, sollte sich herausstellen, dass sich die Heizmatte nicht in ihrer richtigen Position auf dem Lenkradkranz befindet. Dies kann beispielsweise dann auftreten, wenn das Heizelement beim Aufbringen auf den Lenkradkranz nicht ausreichend in allen Richtungen gedehnt wurde und zum Beispiel Falten wirft. Eine eventuell erforderliche Fixierung mit Kleber kann oder muss erst nach der endgültigen Ausrichtung erfolgen.

Die noppen-, haken- und/oder pilzförmigen Elemente können als großflächige Einheit oder in Form von kleinen, streifenförmigen Abschnitten auf dem Lenkradkranz angeordnet werden. Ein derart vorbereiteter Lenkradkranz kann zu einem beliebig späteren Zeitpunkt weiterverarbeitet werden, ohne dass dies nachteilig für die erforderliche Fixierung der Heizmatte an dem Noppen-, Haken- und/oder Pilzband wäre. Somit wird gemäß der Erfindung die Montage der Heizmatte an dem Lenkradkranz wesentlich vereinfacht. Dies gilt auch dann, wenn als Noppen-, Haken- und/oder Pilzband, vorzugsweise ein solches, das mit einer selbstklebenden Rückseite versehen ist verwendet wird.

Bevorzugt wird ein Trägermaterial in Form eines Gewirkes, vorzugsweise in Form eines Gittergewirkes bzw. eines solchen, das gitterförmige Öffnungen aufweist, eingesetzt. Ein solches Trägermaterial ist zum einen besonders gut geeignet, um daran einen wellen- oder mäanderförmig verlaufenden Heizleiter in Näh- oder Sticktechnik zu befestigen. Zum anderen ist die Struktur eines solchen Gittergewirkes auch geeignet, dass sich darin die einzelnen noppen-, haken- und/oder pilzartigen Köpfe, die an dem Lenkradkranz angeordnet sind, einhaken.

Als besonders bevorzugt hat sich als Trägermaterial ein so genannter Wabentüll erwiesen. Ein solcher Tüll stellt eine gleichmäßige Gitterstruktur durch die einzelnen Fäden bereit. Die Noppen-, Haken- und/oder Pilzvorsprünge können die Öffnungen des Tülls durchdringen und sich an der Rückseite der Tüllfäden verhaken.

Vorzugsweise sollte die Öffnungsweite der Gitter- oder Wabenöffnungen zwischen 0,5 mm und 5 mm betragen, wobei die kleineren Dimensionen zu bevorzugen sind. Die Dimensionierung der Gitter- oder Wabenöffnungen hängt auch davon ab, welche Größe die Noppenteile, Hakenteile oder Pilzteile des Noppen-, Haken- und/oder Pilzbandes aufweisen.

Wie bereits vorstehend erwähnt, können die noppen-, haken- und/oder pilzförmigen Elemente zumindest abschnittsweise entlang des gesamten Umfangs des Lenkradkranzes oder um dessen Umfang in Querschnittsrichtung angebracht werden. Es ist aber auch möglich, die noppen-, haken- und/oder pilzförmigen Elemente entlang des gesamten Umfangs des Lenkradkranzes und/oder um dessen Umfang in Querschnittsrichtung anzubringen, so dass der gesamte Lenkradkranz flächig von dem Noppen-, Haken- und/oder Pilzband überdeckt ist.

Um die Heizmatte an dem Lenkradkranz dauerhaft zu befestigen, wird die Heizmatte mit dem Trägermaterial, nachdem sie an dem Lenkradkranz mittels der noppen-, haken- und/oder pilzförmigen Elemente befestigt bzw. vorfixiert ist, durch einen Kleber flächig fixiert und zumindest teilweise ausgeschäumt. Daher sollte die Heizmatte mit dem Trägermaterial offene während eines Schäumungsprozesses sich bildenden Schaum aufnehmende Strukturen aufweisen. Hierbei ist es möglich, den Schäumungsprozess so durchzuführen, dass die Heizmatte allseitig durch den Schaum umschlossen ist.

Üblicherweise wird ein Lenkradkranz unterhalb der Heizmatte mit einer dünnen, nachgiebigen Schicht in Form einer Ummantelung versehen, die auf den Lenkradkranz aufgeschäumt werden kann. Falls in Verbindung mit einer solchen geschäumten Ummantelung ein Noppen-, Haken- und/oder Pilzband eingesetzt wird, kann dieses bereits vor dem ersten Schäumungsprozess auf dem Lenkradkranz aufgebracht sein. Es muss aber sichergestellt werden, dass die noppen-, haken- und/oder pilzförmigen Elemente nach dem Schäumungsprozess mindestens zwischen 0,1mm und 2mm aus der geschäumten Schicht herausragen. Hierbei ist auch vorgesehen, mehrere Abschnitte eines Noppen-, Haken- und/oder Pilzbands einzusetzen, das während des Schäumungsprozesses beispielsweise mittels einer Art Stempel abgedeckt gehalten wird, so dass kein flüssiger Schaum die Abschnitte des Noppen-, Haken- und/oder Pilzband zusetzt oder überdeckt.

Es ist auch vorgesehen, dass die noppen-, pilz- und/oder hakenförmigen Vorsprünge unmittelbar in der Oberfläche einer auf den Lenkradkranz aufgeschäumten Schicht beim Schäumen ausgebildet werden.

Es ist auch möglich, solche Abschnitte eines Noppen-, Haken- oder Pilzbandes in entsprechende Vertiefungen in dem Lenkradkranz anzuordnen, damit diese keine Verdickung des Durchmessers des Lenkradkranzes hervorrufen, die sich im Überzug des Lenkrades abzeichnen könnten.

Ein Noppen-, Haken- oder Pilzband kann am Lenkradkranz mittels Kleber befestigt werden. Dieser Kleber wird bevorzugt auf die Rückseite des Noppen-, Haken- oder Pilzbands aufgebracht, so dass dieses selbstklebend ist.

Nach dem Aufbringen der Heizmatte auf dem Lenkradkranz kann die Heizmatte mittels eines weiteren Kleberauftrags (z.B. Sprühkleber) überzogen werden, so dass der Kleber in die Heizmatte eindringt und/oder diese durchdringt und dadurch die Heizmatte flächig an dem Lenkradkranz befestigt ist. Diese Kleberschicht kann dann als Unterlage zum Aufschäumen einer weiteren dünnen Schaumschicht dienen, auf der der äußere Bezug des Lenkrads aufgebracht wird.

Der Heizleiter wird bevorzugt auf dem Trägermaterial in Näh- oder Sticktechnik befestigt. Durch entsprechende Stichstrukturen oder Verläufe des Heizleiters, vorzugsweise wellen- oder mäanderförmig, wird eine Verbesserung der Dehnbarkeit der Heizmatte erreicht, die bei dem Aufbringen der Heizmatte auf den Lenkradkörper von Vorteil ist.

In einer Ausführungsform des Lenkrads können die noppen-, haken- und/oder pilzförmigen Elemente in Form eines Noppen-, Haken- und/oder Pilzbands entlang des radial nach innen weisenden Umfangs des Lenkradkranzes angebracht werden. Die Heizmatte wird dann über den Lenkradkranz gespannt und deren Ränder werden an dem Noppen-, Haken- und/oder Pilzband befestigt bzw. fixiert. Nach dem Aufbringen der Heizmatte auf den Lenkradkranz wird ein Kleber flächig an Stellen der Heizmatte aufgebracht, unter denen sich kein Noppen-, Haken- und/oder Pilzband befindet. Nach Aushärten des Klebers kann das Noppen-, Haken- und/oder Pilzband stückweise vom Lenkradkranz entfernt werden, und die Heizmatte kann an den Stellen, wo das Noppen-, Haken- und Pilzband zuvor aufgebracht war, mit Kleber verklebt werden. Danach kann das Lenkrad einem Schäumungsprozess unterzogen werden, um die Heizmatte zumindest teilweise mit Schaum zu umschließen.

In einer weiteren Ausführungsform kann die Heizmatte auf der Außenseite vollständig durch Holz- oder Kunststoffschalen umschlossen werden. In einem solchen Fall sind keine weiteren Schäumprozesse zwingend erforderlich.

Weitere Einzelheiten und Merkmale der Erfindung ergeben sich aus der nachfolgenden Beschreibung von Ausführungsbeispielen anhand der Zeichnung. In der Zeichnung zeigt
- Figur 1: ein Lenkrad mit einer Heizmatte, wobei der Aufbau des Lenkradkranzes im Detail in der Querschnittsdarstellung auf der rechten Seite dargestellt ist,
- Figur 2: eine schematische Explosionsdarstellung des Aufbaus einer Heizmatte, wie sie auch in dem Lenkrad der Figur 1 verwendet werden kann,
- Figur 3: einen Schnitt durch eine Heizmatte, die in ihrem Aufbau derjenigen entspricht, die in Figur 2 dargestellt ist,
- Figur 4: einen Abschnitt eines Lenkradkranzes mit einem daran in Umfangsrichtung angeordneten Noppen-, Haken- oder Pilzband, und
- Figuren 5A bis 5D: den Lenkradabschnitt, wie er in Figur 4 dargestellt ist, mit verschiedenen Noppen-, Haken- und/oder Pilzbändern.

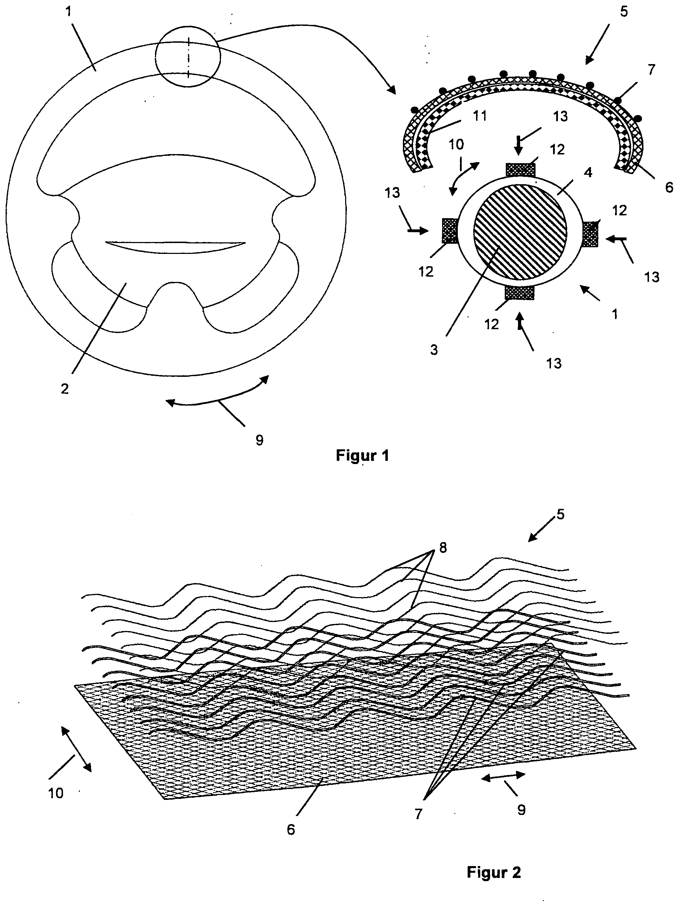

Das Lenkrad, wie es in Figur 1 dargestellt ist, umfasst einen Lenkradkranz 1, der an einer nicht näher dargestellten Nabe unterhalb eines Pralltopfs 2 gehalten ist. Der Lenkradkranz 1 weist einen massiven Kernkörper 3 auf, der von einer geschäumten Schicht 4 allseitig umgeben ist.

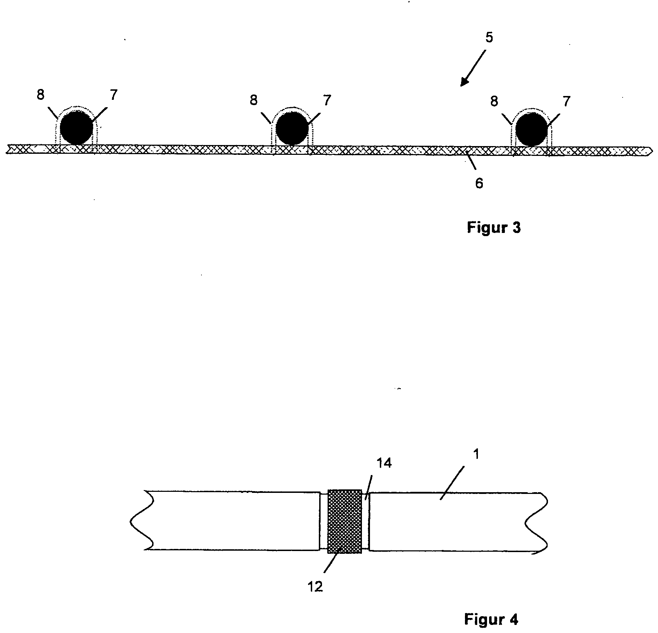

Zum Beheizen des Lenkradkranzes 1 des Lenkrads ist eine Heizmatte 5 vorgesehen, wie sie in der rechten Darstellung der Figur 1 im Schnitt dargestellt ist. Die Heizmatte 5 ist darüber hinaus in Figur 2 in einer Explosionsdarstellung und in Figur 3 in einer Schnittdarstellung gezeigt.

Wie insbesondere anhand der Figur 2 zu erkennen ist, umfasst die Heizmatte ein Trägermaterial 6, auf dem ein wellen- oder mäanderförmig verlaufender Heizleiter 7 in Näh- oder Sticktechnik mittels Näh- oder Stickfäden 8 befestigt ist, wie dies detaillierter die Figur 3 darstellt.

Das Trägermaterial 6 weist im Zuschnitt (siehe Figur 2) eine Länge in Längsrichtung, durch den Doppelpfeil 9 angedeutet, auf, die der Umfangslänge des Lenkradkranzes 1, ebenfalls mit dem Doppelpfeil 9 in Figur 1 gekennzeichnet, entspricht. Die Breite des Zuschnitts der Figur 2, angedeutet durch den Doppelpfeil 10, entspricht der Umfangslänge des Lenkradkranzes 1 bzw. des Kernkörpers 3 mit der geschäumten Schicht 4, ebenfalls angedeutet durch den Doppelpfeil 10 in Figur 1.

Bei dem Trägermaterial 6 kann es sich um ein Gewirke handeln. Weiterhin sind als Trägermaterial 6 ein Tüll mit gitterförmigen Öffnungen oder ein Wabentüll zu bevorzugen, wie dies auch durch den Verlauf der Fäden des Trägermaterials 6 in Figur 2 angedeutet ist. Solche Tülle besitzen eine Gitter- oder Wabenstruktur mit kleinen Gitter- oder Wabenöffnungen, deren Öffnungsweite jeweils zwischen 0,5 mm und 5 mm betragen sollte.

Auf das Trägermaterial 6 sind die Heizleiter vorzugsweise in einem wellen- oder mäanderförmigen Verlauf durch einen Näh- oder Stickfaden 8 aufgenäht oder aufgestickt, wie dies in Figur 3 angedeutet ist. Die Hauptverlaufsrichtung der Heizleiter 7 entspricht der Längsrichtung des Trägermaterials 6 bzw. der Umfangsrichtung des Lenkradkranzes 1, die mit dem Doppelpfeil 9 bezeichnet sind. Die Amplituden des wellenförmigen Verlaufs der Heizleiter 7 sind in der Richtung der Breite des Trägermaterials 6 bzw. der Umfangsrichtung des Lenkradkranzes 9, angedeutet durch die Doppelpfeile 10, ausgerichtet.

Die Heizmatte 5, wie sie in den Figuren 2 und 3 gezeigt ist, weist eine gute Dehnbarkeit sowohl in Richtung des Doppelpfeils 9 als auch senkrecht dazu in Richtung des Doppelpfeils 10 auf, das bedeutet sie zeigt gute Dehneigenschaften sowohl in Umfangsrichtung als auch in Querschnittsrichtung des Lenkradkranzes 1. Zu diesen guten Dehneigenschaften trägt zum einen die Gitterstruktur des Trägermaterials 6 und zum anderen der wellen- oder mäanderförmige Verlauf der Heizleiter 8 bei. Weiterhin werden diese Dehneigenschaften in diesen beiden Richtungen dadurch gefördert, dass die Fäden, die die Gitter- oder Wabenstruktur des Trägermaterials 6 bilden, in einer Richtung verlaufen, die nicht mit der Umfangsrichtung 9 und der Querschnittsrichtung 10 und damit der Längsrichtung und der Querrichtung des Trägermaterials 6 zusammenfallen. Die einzelnen Fäden des Trägermaterials 6 sollten daher unter einem Winkel zu den beiden Richtungen 9 und 10 verlaufen, der zwischen 10° und 90°, vorzugsweise zwischen 30° und 60°, beträgt. Falls es erforderlich ist, kann die Heizmatte 5 auf der zu dem Lenkradkranz 1 hinweisenden Seite des Trägermaterials 6 mit einer nachgiebigen Schicht 11, beispielsweise einer dünnen Schaumschicht, belegt werden.

Um eine Heizmatte 5, wie sie in den Figuren dargestellt ist, an dem Lenkradkranz 1 faltenfrei anzubringen, muss die Heizmatte 5 beim Aufbringen insbesondere in den beiden durch die Pfeile 9 und 10 angedeuteten Richtungen gedehnt werden. Die Befestigung der Heizmatte 5 an dem Lenkradkranz 1 erfolgt üblicherweise durch einen geeigneten Klebstoff. Dies wiederum erfordert, dass die Heizmatte 5 bereits beim ersten Andrücken an den Lenkradkranz 1 korrekt positioniert sein muss, da ein nachträgliches Lösen der Heizmatte 5 von dem Lenkradkranz 1, auch nur abschnittsweise, nicht mehr möglich ist, da der Klebstoff unmittelbar seine Klebekraft entfaltet.

Das Lenkrad gemäß der Erfindung verwendet allerdings für die Anbringung der Heizmatte 5 an dem Lenkradkranz 1 noppen-, haken- und/oder pilzförmige Elemente 12, die dem Lenkradkranz 1 zugeordnet sind. Diese Elemente 12 können über die gesamte Oberfläche des Lenkradkranzes 1 verteilt vorhanden sein, oder aber nur in definierten Abschnittsbereichen, wie dies in Figur 1 dargestellt ist. Die noppen-, haken- und/oder pilzförmigen Elemente 12 sind so strukturiert, dass sie sich dann, wenn die Heizmatte 5 an den Lenkradkranz 1 in Richtung der Pfeile 13 angedrückt wird, in oder an dem Trägermaterial 6 oder aber der nachgiebigen Schicht 11, falls eine solche zum Einsatz kommt, verhaken und so die Heizmatte 5 an dem Lenkradkranz 1 fixieren. Eine solche Verbindung hat den Vorteil, dass sie wieder gelöst werden kann, falls die Heizmatte 5 nicht perfekt an den Lenkradkranz 1 angedrückt wurde. Weiterhin müssen keine Vortrocknungszeiten, wie sie bei einem Klebemittel eingehalten werden müssen, beachtet werden.

Es hat sich gezeigt, dass ein besonders gutes Verhaken der noppen-, haken- und/oder pilzförmigen Elemente 12 dann gegeben ist, wenn das Trägermaterial 6 eine gitterartige Struktur aufweist. Die noppen-, haken- und/oder pilzförmigen Elemente 12 können dann die Öffnungen der gitterartigen Struktur durchdringen und sich an der Fadenstruktur, die das Trägermaterial 6 bildet, verhaken. Eine gute Verbindung zwischen den noppen-, haken- und/oder pilzförmigen Elementen 12 wird auch dann erreicht, wenn eine nachgiebige Schicht 11 auf der Unterseite des Trägermaterials 6 angeordnet wird, die zum Beispiel aus einem Filzmaterial gebildet ist. Die noppen-, haken- und/oder pilzförmigen Elemente 12 verhaken sich dann unmittelbar in dem Filzmaterial oder durchdringen das Filzmaterial, um sich an der Fadenstruktur des Trägermaterials 6 zu verhaken und/oder in den Öffnungen zu verklemmen.

Die noppen-, haken- und/oder pilzförmigen Elemente 12 sind in der Ausführungsform der Figur 1 in Form von vier Streifen verteilt, die in Umfangsrichtung des Lenkradkranzes 1 verlaufen und in Querschnittsrichtung jeweils um 90° beabstandet sind. Alternativ dazu können die noppen-, haken- und/oder pilzförmigen Elemente 12 auch in schmalen Streifen in Querschnittsrichtung angeordnet werden, wie dies in Figur 4 dargestellt ist. Darüber hinaus sind die noppen-, haken- und/oder pilzförmigen Elemente 12 in Figur 4 in einer radial um den Umfang des Lenkradkranzes 1 verlaufenden Nut 14 positioniert.

Die noppen-, haken- und/oder pilzförmigen Elemente 12 können auch nur dazu eingesetzt werden, die Heizmatte 5 an dem Lenkradkranz 1 zu positionieren, um sie dann, wenn sie korrekt um den Lenkradkranz 1 herum angeordnet ist, zusätzlich zu verkleben. Hierfür kann es ausreichend sein, dass die noppen-, haken- und/oder pilzförmigen Elemente 12 in Form eines schmalen Bandes um den radial nach innen weisenden Umfang des Lenkradkranzes 1 angeordnet werden. Wenn die Heizmatte 5 dann um den Lenkradkranz 1 gespannt wird, werden die Längsränder der Heizmatte 5 an diesem schmalen Band befestigt. Anschließend wird Kleber auf die Außenseite der Heizmatte 5 aufgebracht, der dann in die Öffnungen des Trägermaterials 6 der Heizmatte 5 und in die nachgiebige Schicht 11, falls eine solche vorhanden ist, eindringt und diese bis zur Oberfläche des Lenkradkranzes 1 hin durchdringt. Anstelle eines solchen Klebers könnte auch ein Schäumungsprozess vorgenommen werden, bei dem auf die Außenseite der Heizmatte 5 Schaum aufgebracht wird, der die Heizmatte 5 durchdringt und sich mit dem Lenkradkranz 1 verbindet. Ein solcher Schaum kann gleichzeitig eine Polsterschicht auf der Außenseite des Heizelements 5 erzeugen, auf die dann der eigentliche Lenkradbezug, der in den Figuren nicht näher dargestellt ist, aufgebracht wird. Durch diesen Schaum sind die Heizmatte 5 und damit die Heizelemente zumindest teilweise in dem Schaum eingebettet.

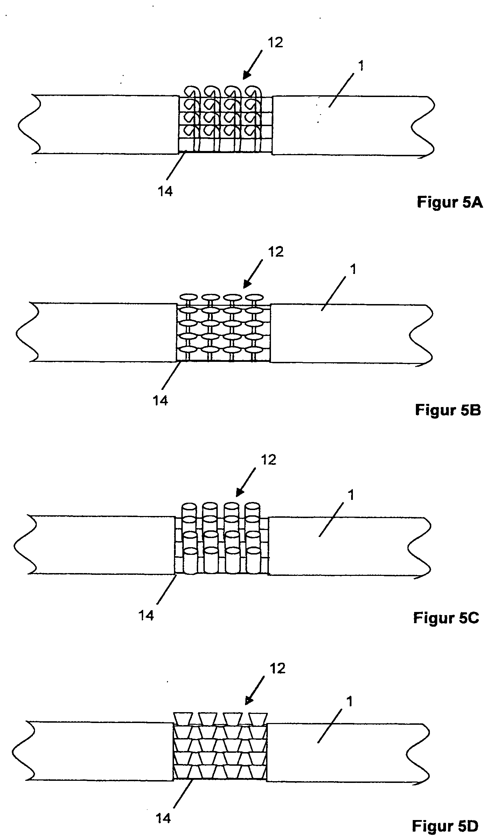

In den Figuren 5A bis 5D sind schematisch verschiedene noppen-, haken- und pilzförmige Elemente dargestellt, die eingesetzt werden können.

Die Figur 5A zeigt ein Band mit hakenförmigen Vorsprüngen, während die Figur 5B pilzförmige Elemente zeigt. Diese Vorsprünge können sich mit ihren hakenförmigen oder pilzförmigen Enden, beispielsweise in den Fäden des Gittertülls, das das Trägermaterial 6 der Heizmatte 5 bildet, verhaken.

Die Ausführungsform der Figur 5C zeigt noppenartige Vorsprünge. Solche Vorsprünge können auch eingesetzt werden; es muss allerdings gewährleistet sein, dass diese noppenartigen Vorsprünge in das Trägermaterial 6 der Heizmatte 5 eindringen können, damit sie darin klemmend gehalten werden. Hierzu müssen der Durchmesser der noppenartigen Vorsprünge und die Öffnungsweite der gitterartigen Struktur aneinander angepasst werden.

Die Figur 5D zeigt noppenartige Vorsprünge, die eine kegelstumpfförmige Gestalt aufweisen, wobei sich der größere Durchmesser am freien Ende der noppenartigen Vorsprünge befindet. Somit können sich diese noppenartigen Vorsprünge ebenfalls auf der Rückseite der Fäden der gitterartigen Struktur des Trägermaterials verhaken.

## Patentansprüche

1. Lenkrad mit einer Heizmatte (5), die zumindest ein dünnes, dreidimensional verformbares, textiles Trägermaterial (6) sowie auf dem Trägermaterial befestigte, wellen- oder mäanderförmig verlaufende Heizleiter (7) aufweist, **dadurch gekennzeichnet, dass** die Heizmatte (5) mittels auf dem Lenkradkranz (1) aufgebrachten noppen-, haken- und/oder pilzförmigen Elementen (12), die die Heizmatte (5) durchdringen und sich in dem Trägermaterial (6) verhaken, fixiert ist.

2. Lenkrad nach Anspruch 1, **dadurch gekennzeichnet, dass** das Trägermaterial (6) durch ein Gewirke gebildet ist.

3. Lenkrad nach Anspruch 1, **dadurch gekennzeichnet, dass** das Trägermaterial (6) gitterförmige Öffnungen aufweist.

4. Lenkrad nach Anspruch 1, **dadurch gekennzeichnet, dass** das Trägermaterial (6) durch einen Wabentüll gebildet ist.

5. Lenkrad nach Anspruch 3 oder 4, **dadurch gekennzeichnet, dass** die Öffnungsweite der Gitter- oder Wabenstrukturen zwischen 0,5 mm und 5 mm beträgt.

6. Lenkrad nach einem der vorstehenden Ansprüche, **dadurch gekennzeichnet, dass** die noppen-, haken- und/oder pilzförmigen Elemente (12) zumindest abschnittsweise entlang des Umfangs des Lenkradkranzes (1) und/oder um dessen Umfang in Querschnittsrichtung angeordnet sind.

7. Lenkrad nach Anspruch 6, **dadurch gekennzeichnet, dass** die noppen-, haken- und/oder pilzförmigen Elemente (12) entlang des radial nach innen weisenden Umfangs des Lenkradkranzes (1) angebracht sind.

8. Lenkrad nach einem der vorhergehenden Ansprüche, **dadurch gekennzeichnet, dass** die noppen-, haken- und/oder pilzförmigen Elemente (12) in einer um den Lenkradkranz (1) geschäumten Schicht (11) gehalten sind.

9. Lenkrad nach einem der vorstehenden Ansprüche, **dadurch gekennzeichnet, dass** die Heizmatte (5) eine auf der zum Lenkradkranz (1) hinweisenden Seite des Trägermaterials (6) angeordnete, in Richtung des Lenkradkranzes (1) nachgiebige Schicht (11) aufweist.

10. Lenkrad nach einem der vorstehenden Ansprüche, **dadurch gekennzeichnet, dass** die Heizmatte (5) schaumdurchlässig ist.

11. Lenkrad nach Anspruch 10, **dadurch gekennzeichnet, dass** die Heizmatte (5) durch in einem Schäumungsprozess gebildeten Schaum zumindest teilweise umschlossen ist.

12. Lenkrad nach einem der vorstehenden Ansprüche, **dadurch gekennzeichnet, dass** die noppen-, haken- und/oder pilzförmigen Elemente (12) durch ein Noppen-, Haken- und/oder Pilzband gebildet sind.

13. Heizeinheit für eine Lenkradheizung mit einer Heizmatte sowie einem auf einem Lenkradkranz (1) aufbringbaren Noppen-, Haken- und/oder Pilzband, wobei das Noppen-, Haken- und/oder Pilzband nach dem Anspruch 12 ausgebildet ist.

## Claims

1. Steering wheel having a heating mat (5) which comprises at least one thin, three-dimensionally deformable, textile carrier material (6) and heating conductors (7) which are fastened to the carrier material and extend in a wave-shaped or meander-like manner, **characterized in that** the heating mat (5) is fixed by means of knob-shaped, hook-shaped and/or mushroom-shaped elements (12) which are applied to the steering wheel rim (1), penetrate through the heating mat (5) and get hooked in the carrier material (6).

2. Steering wheel according to claim 1, **characterized in that** the carrier material (6) is formed by a knitted fabric.

3. Steering wheel according to claim 1, **characterized in that** the carrier material (6) has grid-shaped openings.

4. Steering wheel according to claim 1, **characterized in that** the carrier material (6) is formed by a honeycomb tulle.

5. Steering wheel according to claim 3 or 4, **characterized in that** the opening width of the grid or honeycomb structures is between 0.5 mm and 5 mm.

6. Steering wheel according to one of the preceding claims, **characterized in that** the knob-shaped, hook-shaped and/or mushroom-shaped elements (12) are arranged at least in sections along the circumference of the steering wheel rim (1) and/or around its circumference in cross-sectional direction.

7. Steering wheel according to claim 6, **characterized in that** the knob-shaped, hook-shaped and/or mushroom-shaped elements (12) are arranged along the radially inwardly pointing circumference of the steering wheel rim (1).

8. Steering wheel according to one of the preceding claims, **characterized in that** the knob-shaped, hook-shaped and/or mushroom-shaped elements (12) are held in a layer (11) foamed around the steering wheel rim (1).

9. Steering wheel according to one of the preceding claims, **characterized in that** the heating mat (5) comprises a layer (11) which is arranged on the side of the carrier material (6) facing the steering wheel rim (1) and is flexible in the direction of the steering wheel rim (1).

10. Steering wheel according to one of the preceding claims, **characterized in that** the heating mat (5) is foam-permeable.

11. Steering wheel according to claim 10, **characterized in that** the heating mat (5) is at least partially enclosed by foam formed in a foaming process.

12. Steering wheel according to one of the preceding claims, **characterized in that** the knob-shaped, hook-shaped and/or mushroom-shaped elements (12) are formed by a knob, hook and/or mushroom band.

13. Heating unit for a steering wheel heating with a heating mat as well as a knob, hook and/or mushroom band which can be applied to a steering wheel rim (1), wherein the knob, hook and/or mushroom band is formed according to claim 12.

## Revendications

1. Volant de direction comprenant un matelas chauffant (5), qui comporte au moins un matériau de support (6) textile, mince, déformable en trois dimensions, ainsi que des conducteurs chauffants (7) fixés sur le matériau de support et s'étendant selon une forme ondulée ou en méandres, **caractérisé en ce que** le matelas chauffant (5) est fixé au moyen d'éléments (12) en forme de plots, en forme de crochets et/ou fongiformes, qui sont placés sur la couronne de volant de direction (1), traversent le matelas chauffant (5) et s'accrochent dans le matériau de support (6).

2. Volant de direction selon la revendication 1, **caractérisé en ce que** le matériau de support (6) est formé par un tricot.

3. Volant de direction selon la revendication 1, **caractérisé en ce que** le matériau de support (6) présente des ouvertures en forme de treillis.

4. Volant de direction selon la revendication 1, **caractérisé en ce que** le matériau de support (6) est formé par un tissu de tulle alvéolé.

5. Volant de direction selon la revendication 3 ou la revendication 4, **caractérisé en ce que** la largeur d'ouverture des structures en treillis ou en alvéoles se situe entre 0,5 mm et 5 mm.

6. Volant de direction selon l'une des revendications précédentes, **caractérisé en ce que** les éléments (12) en forme de plots, en forme de crochets et/ou fongiformes, sont agencés au moins par secteurs le long de la périphérie de la couronne de volant de direction (1), et/ou autour de la périphérie de celui-ci dans la direction de la section transversale.

7. Volant de direction selon la revendication 6, **caractérisé en ce que** les éléments (12) en forme de plots, en forme de crochets et/ou fongiformes, sont placés le long de la périphérie dirigée radialement vers l'intérieur, de la couronne de volant de direction (1).

8. Volant de direction selon l'une des revendications précédentes, **caractérisé en ce que** les éléments (12) en forme de plots, en forme de crochets et/ou fongiformes, sont maintenus dans une couche (11) obtenue par moussage autour de la couronne de volant de direction (1).

9. Volant de direction selon l'une des revendications précédentes, **caractérisé en ce que** le matelas chauffant (5) présente une couche (11), qui est agencée sur le côté du matériau de support (6), dirigé vers la couronne de volant de direction (1), et qui est souple en direction de la couronne de volant de direction (1).

10. Volant de direction selon l'une des revendications précédentes, **caractérisé en ce que** le matelas chauffant (5) est perméable à la mousse.

11. Volant de direction selon la revendication 10, **caractérisé en ce que** le matelas chauffant (5) est enveloppé au moins partiellement par une mousse formée lors d'un processus de moussage.

12. Volant de direction selon l'une des revendications précédentes, **caractérisé en ce que** les éléments (12) en forme de plots, en forme de crochets et/ou fongiformes, sont formés par une bande à plots, à crochets et/ou à éléments fongiformes.

13. Unité chauffante pour un système chauffant de volant de direction comprenant un matelas chauffant ainsi qu'une bande à plots, à crochets et/ou à éléments fongiformes, pouvant être appliquée sur une couronne de volant de direction (1), la bande à plots, à crochets et/ou à éléments fongiformes étant réalisée conformément à la revendication 12.
